# EUROPÄISCHE PATENTANMELDUNG

(11) **EP 0 561 285 A1**
(43) Veröffentlichungstag der Anmeldung: **22.09.1993**
(21) Anmeldenummer: 93103976.2
(22) Anmeldetag: 11.03.1993
(51) Int. Cl.: B29B 13/10, B02C 4/02, B29K 21/00

(54) **Verfahren und Vorrichtung zur Entsorgung von Altgummireifen durch Destruktion**

(30) Priorität: 18.03.1992 DE 4208561
(71) Anmelder: PAUL TROESTER MASCHINENFABRIK, D-30519 Hannover (DE)
(72) Erfinder: Lozhechnikov, Yevgenity, Prof. Dr., Minsk By (RU); Schmidt, Karl Heinz, Dipl.-Ing., W-3005 Hemmingen 4 (DE); Seidler, Ekkehard, Dipl.-Ing., W-3000 Hannover 1 (DE); Gohlisch, Hans-Joachim, Dipl.-Ing., W-3000 Hannover 81 (DE)
(74) Vertreter: Junius, Walther, Dr.

(57) **Zusammenfassung**

Die Erfindung betrifft ein Verfahren und Vorrichtungen zur Entsorgung von Altgummireifen durch Destruktion. Es ist die Aufgabe der Erfindung, mit höchst einfachen Mitteln Altgummireifen ohne vorherige Entfernung der Metallteile und ohne verschleißende Werkzeuge zu zerkleinern. Die Erfindung besteht darin, daß man den zu zerstörenden Altgummireifen zwischen zwei Walzen einspannt, von denen die eine an den zur Anlage an der Felge bestimmten Wülsten, die andere an der Lauffläche des Reifens anliegt, daß man die Walzen mit erheblicher Kraft gegeneinander drückt und den Reifen dabei unter Zusammendrücken seiner ursprünglichen Form und Verringerung seiner Laufflächenstärke im Walzenspalt quetscht und daß man die gegeneinander gedrückten Walzen rotiert.

## Beschreibung

Die Erfindung betrifft ein Verfahren und Vorrichtungen zur Entsorgung von Altgummireifen durch Destruktion.

Die Entsorgung von Altgummireifen ist ein schwer lösbares Problem. Zum einen bereitet es erhebliche Schwierigkeiten, die im Gummi des Reifens eingelagerten Metallteile vom Gummi zu trennen, bevor dieses durch Zerkleinerungsmaschinen läuft, zum anderen bestehen Möglichkeiten der Wiederverwendung von Altgummi nur dann, wenn das Altgummi in sehr fein zerteilter Form praktisch pulverförmig vorliegt, weil nur in dieser Form Altgummi als Zuschlagstoff von der Gummiindustrie für die Produktion neuer Gummiwaren wieder verwertet werden kann.

Vielfältige Versuche sind unternommen worden, um die Metallteile aus dem Reifen herauszulösen. Denn in späteren Arbeitsverfahren würden die Metallteile die Bearbeitungswerkzeuge schon nach kurzer Zeit stumpf machen und zu einem schnellen Verschleiß führen. Deshalb hat man, wie in der DE 39 ll 082 A1 gezeigt, den Gummireifen einem induktiven Feld ausgesetzt, durch welches die Metalleinlagen stark erhitzt und dabei ausgeglüht werden. In den Grenzschichten zerfällt das miterhitzte Gummi zu Kohlenstaub, allerdings unter erheblicher Rauch- und Geruchsbildung, so daß dieses Verfahren nur in speziellen Kammern mit besonderen Vorrichtungen für ein Verhindern des Austrittes von Rauch und Geruch durchgeführt werden kann. Auf diese Weise ist eine nachfolgende Zerkleinerung möglich, wenn auch die ausgeglühten Metallteile immer noch auf die Zerkleinerungswerkzeuge stärker abnutzend als die Gummiteile einwirken.

Um die Altgummireifen zu zerkleinern, setzt man schneidende und spanende Werkzeuge ein. Gemäß der DE 29 ll 25l C2 wird der Reifen in einer Einspannvorrichtung mit drei nach außen verschiebbaren Zapfen aufgenommen, sodann wird mit rotierenden Scheibenmessern ein tangentialer Einschnitt vorgenommen und die Lauffläche mit den Seitenstreifen von den die metallischen Einlagen vorzugsweise enthaltenden, an den Felgen anliegenden Wülsten abgeschnitten und nachfolgend durch weitere kreisscheibenförmige Messer in Streifen zerschnitten und dann einer Querschneidevorrichtung zugeführt. Zur Durchführung dieser Zerkleinerung ist ein erheblicher maschineller Aufwand notwendig. Man erhält geschnittene Altgummistücke, die als solche noch nicht wiederverwendbar sind, sondern noch weiteren Verarbeitungsprozessen unterzogen werden müssen.

Andere, den Altgummireifen ebenfalls in radialer Richtung abbauende Maschinen sind die Shredder, welche mit rotierenden Messerwalzen am Umfang des Laufstreifens angreifen, den Reifen zu Chips zerkleinern und bei dieser Tätigkeit radial fortschreiten (US 36 93 894 A1). In ähnlicher Weise arbeitet die Maschine nach der SU l3 88 294 A1, wobei hier der Reifen durch beidseitig an den Seitenstreifen angreifende Schalen eingespannt und gepreßt wird, wodurch der Laufstreifen gebogen und verformt wird und in diesem schmaleren Zustand den Messern einer Shredderwalze zugeführt wird.

Ähnlich erfolgt die Zerkleinerung in der Zerkleinerungsmaschine nach der DE 37 04 725 A1, in welcher die auf rotierenden Zerkleinerungswalzen angeordneten Zerkleinerungswerkzeuge Hartmetallplättchen sind und die Zerkleinerungswerkzeuge selbst in besonderer Form angeordnet sind.

Neben diesen den Altgummireifen radial abarbeitenden Vorrichtungen ist durch die SU l4 44 l58 A1 eine ebenfalls mit den Werkzeugen eines Shredders arbeitende Maschine bekannt geworden, mit der der Reifen zuerst in Axialrichtung und dann in Radialrichtung abgearbeitet wird.

Alle diese Vorrichtungen arbeiten mit hohem maschinellen Aufwand und schnell verschleißenden Zerkleinerungswerkzeugen.

Die Erfindung vermeidet die Nachteile des Standes der Technik. Es ist die Aufgabe der Erfindung, mit höchst einfachen Mitteln Altgummireifen ohne vorherige Entfernung der Metallteile und ohne verschleißende Werkzeuge zu zerkleinern.

Die Erfindung besteht darin, daß man den zu zerstörenden Altgummireifen zwischen zwei Walzen einspannt, von denen die eine an den zur Anlage an der Felge bestimmten Wülsten, die andere an der Lauffläche des Reifens anliegt, daß man die Walzen mit erheblicher Kraft gegeneinander drückt und den Reifen dabei unter Zusammendrücken seiner ursprünglichen Form und Verringerung seiner Laufflächenstärke im Walzenspalt quetscht und daß man die gegeneinander gedrückten Walzen rotiert.

Durch diesen Quetschvorgang und die gleichzeitig stattfindende Rotation zerbröckelt der Altgummireifen in kleine feine Teile und Teilchen. Er zerfällt auf diese Weise. Übrig bleiben ringförmige Metalleinlagen, die nach dem Zerfallsprozeß von den Walzen abgenommen werden.

Für dieses Verfahren kann man Walzen mit glatter Oberfläche verwenden, die Oberfläche kann aufgerauht sein, zweckmäßig kann es sein, auf der Walzenoberfläche Erhöhungen und/oder Vertiefungen anzuorden, welche den Reifen während der Rotation zur Walzenmittenebene führen. Es ist überraschend zu sehen, wie ein Altgummireifen unter dem angewandten Druck bei seiner Rotation zerfällt, ohne daß Messer, Hartmetallplättchen, Raspeln oder sonstige Bearbeitungswerkzeuge auf ihn einwirken. Dieses Zerfallen des Reifens unter Druck bei Rotation kann man vielleicht dadurch erklären, daß die Einlagen im Reifen zerschneidend auf das Gummi einwirken, wenn dieses unter dem hohen Preßdruck im Walzenspalt zu allen Seiten hin ausweichen will.

Man kann die Walzen mit unterschiedlicher Umfangsgeschwindigkeit rotieren lassen, um zusätzlich noch einen Zerreibungseffekt in das Verfahren einzubringen.

Das Verfahren läßt sich aber nicht nur mit zwei Walzen ausführen, vorteilhaft kann es sein, wenn man eine Walze von einem Durchmesser, der erheblich kleiner als der Reifendurchmesser ist, für die Anlage an den Wülsten verwendet, wenn man neben der zweiten Walze noch eine dritte Walze an der Lauffläche des Reifens unter starkem Preßdruck anliegen läßt, wobei die drei Walzenachsen einen stumpfen Winkel einschließen oder in einer Ebene liegen und wenn man dadurch den Reifen in eine unrunde, vorzugsweise birnenförmige Form zwingt. Hierdurch wird nicht nur der Preßvorgang zweimal auf den Reifen ausgeübt, sondern der Reifen wird in eine unrunde Form gepreßt, wobei zwischen den drei Walzen der Reifenradius sehr viel kleiner geworden ist und dadurch das Gummi viel stärker durch Reißen beansprucht wird und auf diese Weise viel eher Gummistücke abplatzen. Es ist nicht nur möglich, den Reifen in eine unrunde, birnen- oder tropfenförmige Form zu zwingen, sondern man kann ihn auch anders herum in eine herzförmige Form hineinzwingen, wenn man neben der an den Wülsten des Reifens anliegenden Walze noch eine zweite ebenfalls an den Wülsten des Reifens anliegende Walze zusätzlich anordnet und wenn man die an der Lauffläche anliegende Walze in den Zwischenraum zwischen den beiden an den Wülsten des Reifens anliegenden Walzen hineindrückt. Auf diese Weise wird dem Reifen eine ihm völlig fremde Form aufgezwungen und dadurch sein zur Zerbröckelung führender Verschleiß noch weiter gesteigert.

Rauhe Walzenoberflächen erhöhen die Friktion, die Anwendung einer grobverzahnten Walzenoberfläche führt zu Zerreißvorgängen in den Einlagen sowie zu einer stark erhöhten Biegebeanspruchung mit nachfolgendem Aufreißen der Gummiteile.

Für die Durchführung der vorgenannten Verfahren verwendet man Pressen, welche die Walzen gegeneinander unter hohem Druck aneinanderpressen. Man kann aber auch ohne solche Pressen das Verfahren durchführen, wenn man drei Walzen mit in einer Ebene angeordneten Walzenachsen verwendet, von denen die mittlere einen kleineren Durchmesser als den Wulstdurchmesser des zu zerstörenden Reifens aufweist und von denen die beiden äußeren je eine Ausnehmung von der Gestalt eines Kreisscheibensegmentes mit einem Durchmesser größer als der Durchmesser des zu zerstörenden Reifens sowie außerhalb der Ausnehmung, jedoch dieser benachbart, einen Umfangsabschnitt mit sich vergrößerndem Radius aufweisen. Hierbei ist es zweckmäßig, wenn man die äußeren Walzen gegen den Druck von Tellerfedern verschiebbar lagert.

Die erfindungsgemäße Vorrichtung zur Entsorgung von Altgummireifen durch Destruktion besteht aus zwei Walzen, von denen mindestens die eine einen kleineren Durchmesser als den Wulstdurchmesser des zu zerstörenden Reifens aufweist und für die Anlage an den Wülsten, die andere Walze für die Anlage an der Lauffläche des zu zerstörenden Reifens bestimmt ist, aus einem Antrieb für mindestens die eine Walze und aus einer Verschiebe- und Preßvorrichtung, mit der die eine Walze gegen die andere Walze unter starker Quetschung des Reifens anpreßbar ist.

Diese Vorrichtung ist mit einfachen Mitteln herstellbar und zeichnet sich dadurch aus, daß sie praktisch verschleißfrei arbeitet.

Will man dem Reifen bei seiner Destruktion eine Birnenform geben, um die Destruktion noch zu beschleunigen, ist es zweckmäßig, wenn eine dritte, an die Lauffläche des Reifens anpreßbare Walze vorgesehen ist, wobei die Achsen der Walzen einen stumpfen Winkel miteinander einschließen und die mittlere Walze einen erheblich kleineren Durchmesser als der zu zerstörende Reifen aufweist.

Will man hingegen dem Reifen während seiner Destruktion eine Herzform geben, ist es zweckmäßig, wenn eine dritte Walze vorgesehen ist, deren Durchmesser erheblich kleiner als der Wulstdurchmesser des zu zerstörenden Reifens ist und die ebenfalls an den Wülsten des zu zerstörenden Reifens anliegt, wobei die an der Lauffläche anliegende Walze in den Zwischenraum zwischen den beiden an den Wülsten anliegenden Walzen gepreßt wird.

Bei diesen Ausführungen ist die Anwendung einer Presse notwendig, um die Walzen mit starker Kraft gegeneinander zu pressen und den Altgummireifen zwischen den Walzen zu quetschen.

Die Anwendung einer solchen Presse ist nicht notwendig, wenn drei Walzen mit in genähert einer Ebene angeordneten Walzenachsen angeordnet sind, von denen die mittlere einen kleineren Durchmessr als den Wulstdurchmesser des zu zerstörenden Reifens aufweist und von denen die beiden äußeren je eine Ausnehmung von der Gestalt eines Kreisscheibensegmentes mit einem Durchmesser größer als der Durchmesser des zu zerstörenden Reifens sowie außerhalb der Ausnehmung, jedoch dieser benachbart, einen Umfangsabschnitt mit sich vergrößerndem Radius aufweisen.

Um diese Destruktionsmaschinen für Altgummireifen beschicken zu können und um die auf den Walzen übrigbleibenden Stahlringeinlagen entfernen zu können ist es zweckmäßig, wenn zumindest die eine Walze , an welcher die Wülste des zu zerstörenden Reifens anliegen, einseitig gelagert und vorzugsweise auf der anderen Seite während des Betriebes durch eine in der Außerbetriebsstellung entfernbare Stütze abgestützt ist.

Dabei kann die Stütze eine Hydraulik-Zylinder-Kolben-Einheit sein, welche eine Halblagerschale trägt, mit der das freie Ende der einseitig gelagerten Walze abgestützt ist.

Zwischen die Walzen kann der zu zerstörende Reifen durch eine Zubringevorrichtung gebracht werden, vorzugsweise in Form einer Gabel, die an den Wülsten des zu zerstörenden Reifens anliegt, in Form eines Hakens oder in Form einer Rutsche.

Das Wesen der Erfindung ist nachstehend anhand von in der Zeichnung schematisch dargestellten Ausführungsbeispielen näher erläutert. Es zeigen:
- Fig.l: eine Destruktionspresse während der Beschickung
- Fig.2: die Destruktionspresse der Fig. l vor Beginn der Destruktionsarbeit,
- Fig.3: die Destruktionspresse der Fig. l bei ihrer Arbeit,

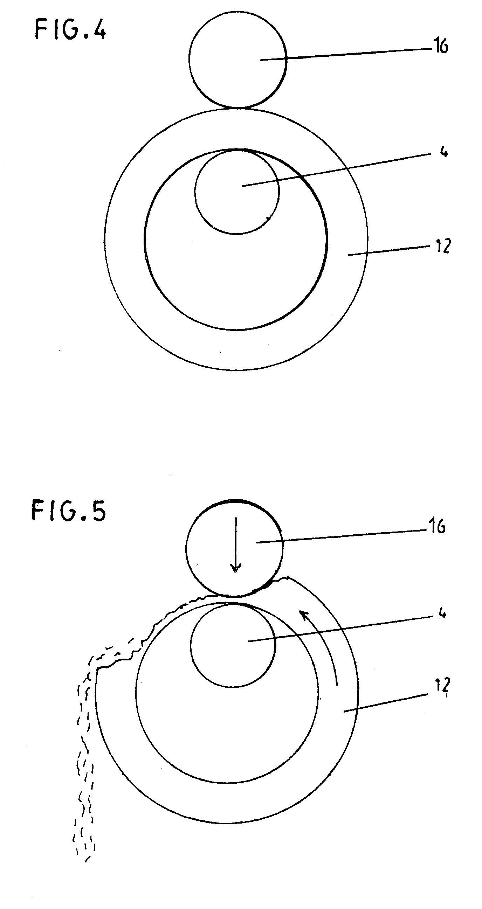

- Fig.4: einen Schnitt durch die Walzen der Destruktionspresse der Fig. l vor ihrer Arbeit,
- Fig.5: bei ihrer Arbeit,
- Fig.6: einen Querschnitt durch die Walzenanordnung einer Destruktionspresse, bei der der Reifen in Birnen- bzw. Tropfenform gepreßt wird vor Beginn der Destruktionsarbeit,
- Fig.7: während der Destruktionsarbeit,
- Fig.8: einen Schnitt durch die Walzenanordnung einer Destruktionspresse, die den Reifen in Herzform bei der Destruktionsarbeit preßt,
- Fig.9: während der Destruktionsarbeit,
- Fig.l0: eine ohne Presse arbeitende Destruktionsmaschine vor Beginn ihrer Arbeit,
- Fig.ll: während ihrer Arbeit.

Im Pressengestell l ist mittels der Lager 2 eine Welle 3 gelagert, auf welcher die Walze 4 befestigt ist. Die Welle 3 ist über das Keilriemenvorgelege 5 mittels des Motors 6 antreibbar. Das freie Ende 7 der Walze 4 trägt ein Lager 8, welches durch die Stütze 9 abgestützt ist, welche von der Kolbenstange l0 der Hydraulik-Kolben-Zylinder-Einheit ll getragen ist. Auf dieser Walze 4 liegt der zu zerstörende Altgummireifen l2 mit seinen Wülsten auf. Im Kopfteil des Pressengestelles l befindet sich eine weitere Hydraulik-Kolben-Zylinder-Einheit l3, deren Kolbenstange l4, welche einen Träger l5 für die Walze l6 trägt, welcher mit seiner einen Stirnseite l7 in einer Führung l8 im oder am Pressengestell l geführt ist. Oberhalb des Fußes l9 des Pressengestells l befindet sich eine Vorrichtung zum Auffangen und Abtransportieren des zerbröckelten und zerbröselten Altgummis in Form von Rutschen 20 und einem Transportband 2l.

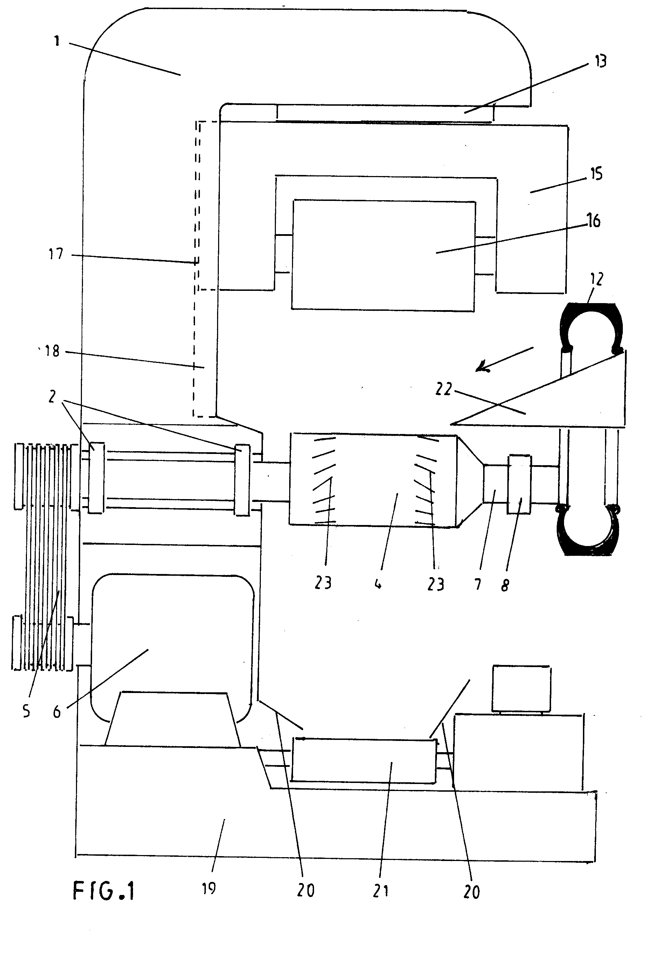

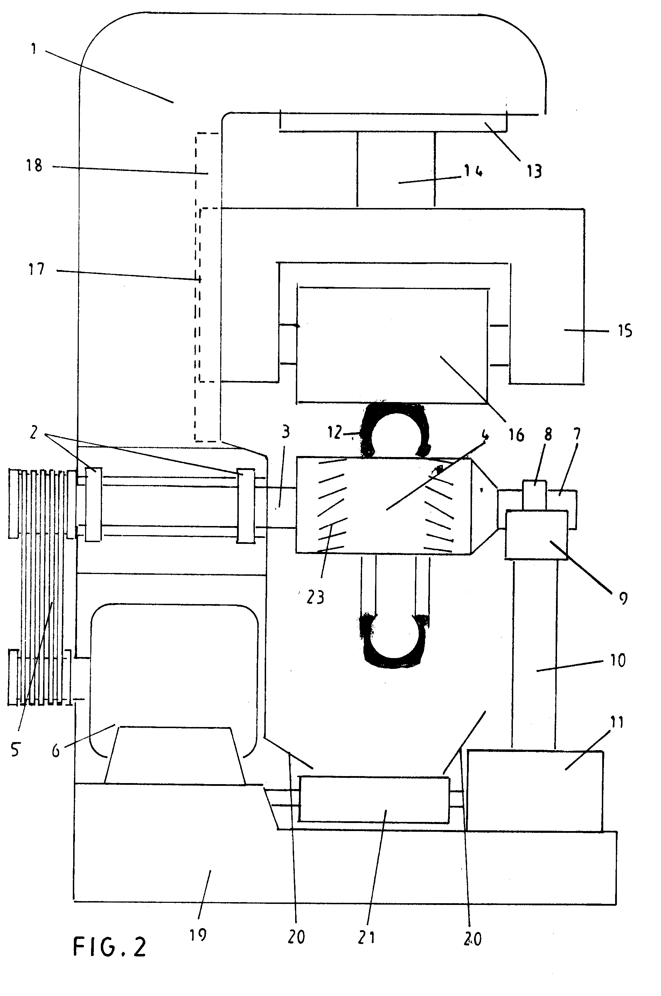

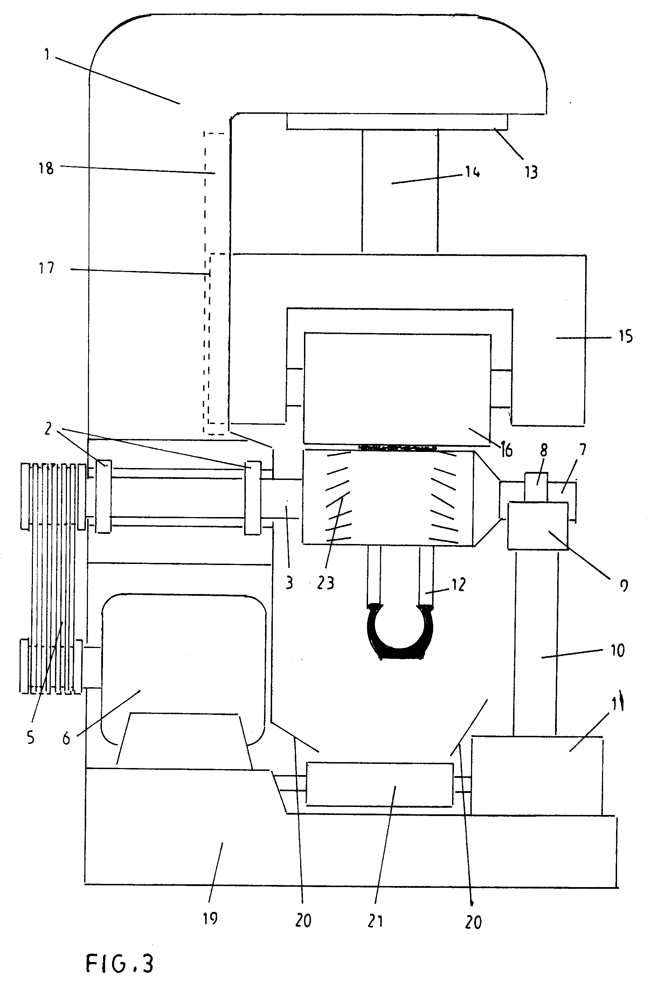

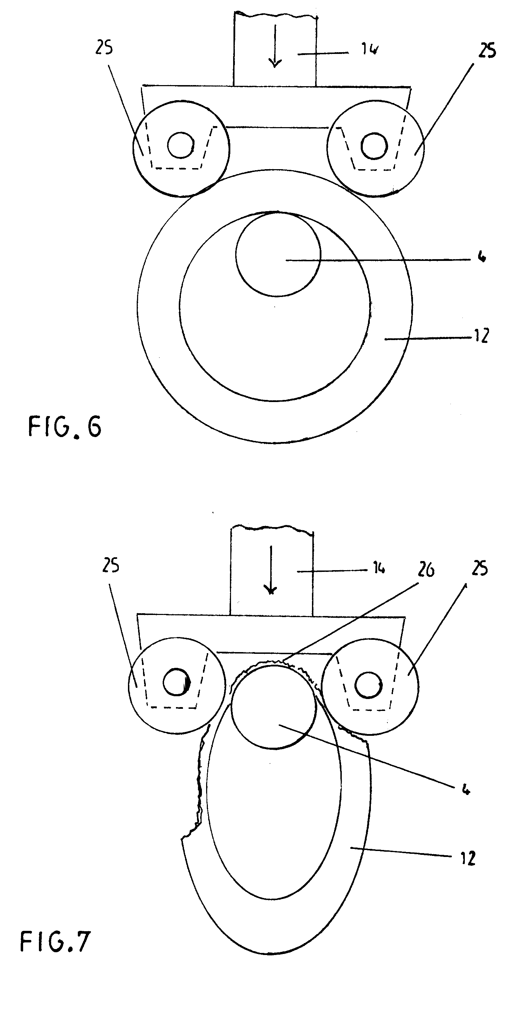

Im Ausführungsbeispiel der Fig. l - 3 ist in Fig. l ersichtlich, wie der zu zerstörende Altgummireifen l2 über eine Rutsche 22 auf die Walze 4 aufgebracht wird, welche durch einige Vertiefungen 23 den Reifen l2 in den mittleren Umfangsbereich der Walze 4 fördern, sobald die Walze l6 auf die Lauffläche des zu zerstörenden Reifens l2 aufgelegt wird, wie es Fig. 2 zeigt. Durch Niederpressen des Trägers l5 wird der zu zerstörende Reifen l2, wie es die Fig. 3 zeigt, verformt und stark gequetscht. Gleichzeitig werden die Walzen 4, l6 rotiert. Dabei zerbröckelt und zerbröselt der Altgummireifen. Übrig bleiben die ringförmigen Metalleinlagen, die nach der Ausführung einer Reihe von Reifendestruktionen von der Walze 4 und der Welle 3 abgenommen werden. Im Ausführungsbeispiel der Fig. 6 und 7 greift anstelle der Walze l6 ein Paar von Walzen 25 am zu zerstörenden Altgummireifen l2 an. Diese zwingen zusammen mit der Walze 4 dem Altgummireifen l2 eine Birnen- oder Tropfenform auf, wobei insbesondere an der Umlenkstelle 26 durch die relativ scharfe Umlenkung Gummiteile brockenförmig gelöst und gelockert werden, die dann beim Durchgang durch den Walzenspalt gequetscht und zerbröselt werden.

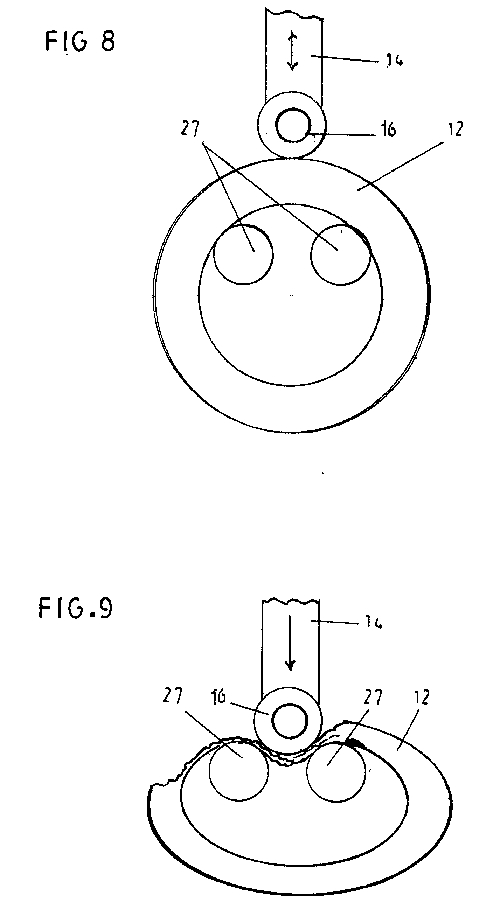

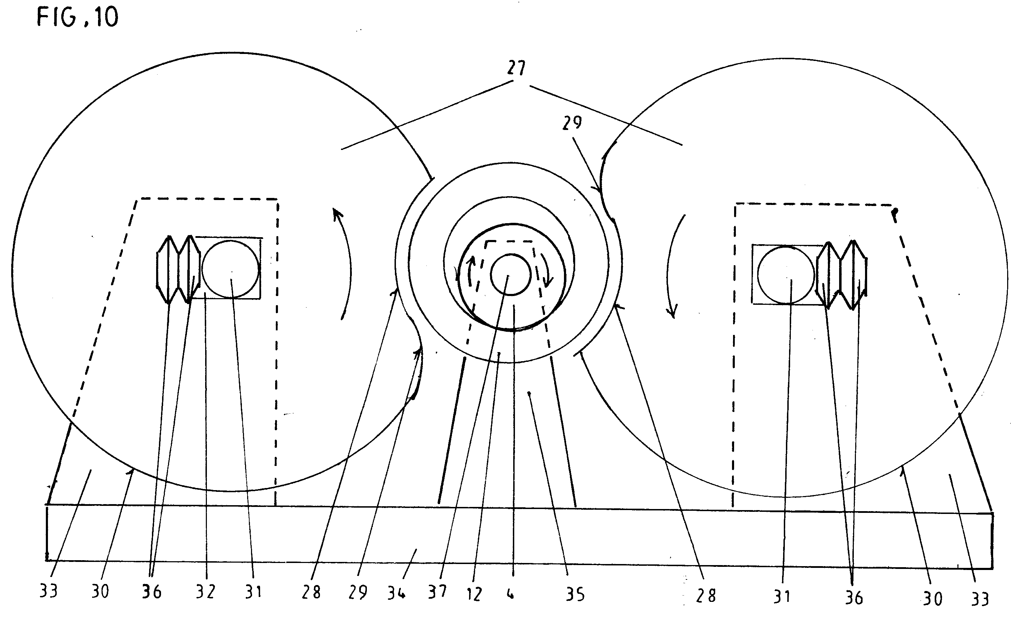

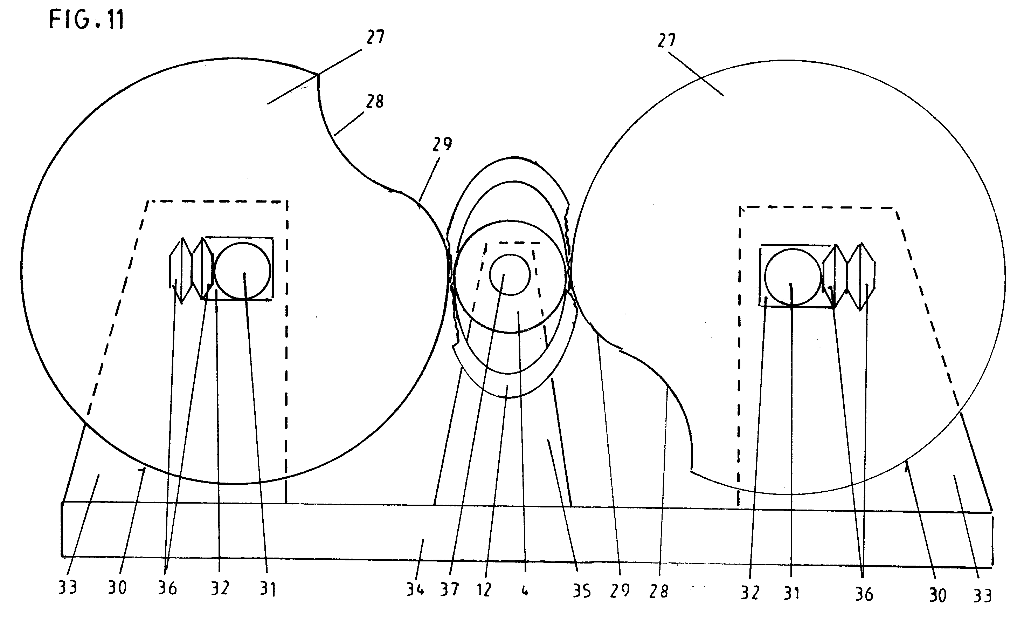

Im Ausführungsbeispiel der Fig. 8 und 9 sind anstelle der Walze 4 zwei Walzen 27 vorgesehen, welche in Zusammenwirken mit der Walze l6 dem zu zerstörenden Altgummireifen eine Herzform aufzwingen, die für das Zerreißen nichtmetallischer Einlagen günstig ist.

Im Ausführungsbeispiel der Fig. l0 und ll sind drei Walzen vorgesehen, und zwar eine mittlere Walze 4 und zwei äußere Walzen 27, welche so große Ausnehmungen 28 aufweisen, daß in diese ein Reifen l2 eingelegt und über die Walze 4 gestülpt werden kann, wenn die Ausnehmungen 28 einander und der Walze 4 zugekehrt sind. Die beiden Walzen 27 sind motorisch angetrieben, wobei nur die eine Walze einen kräftigen Motor zu haben braucht, während die andere Walze von einem schwachen Motor angetrieben werden kann, der lediglich dafür sorgt, daß nach dem Einlegen des zu zerstörenden Reifens 7 die Walze mit ihrer Umfangsfläche an der Lauffläche des zu zerstörenden Reifens anliegt. Zu einer Seite der Ausnehmung 28 weist jede der Walzen 27 einen Abschnitt 29 auf, in welchem sich der Radius der Walze vergrößert. Dieser Abschnitt 29 dient dazu, den zu zerstörenden Reifen l2 in den sich verengenden Walzenspalt einzuziehen, damit er bei der weiter fortschreitenden Drehbewegung der Walze 27 stark gequetscht wird. Der Abstand der Walzenachsen voneinander ist so gewählt, daß im Arbeitsbereich 30 der Abstand der Achse der Walze 4 von der Achse der Walzen 27 kleiner als die Stärke des Reifens im Bereich der Lauffläche ist.

Gelagert sind die Walzen 27 mittels ihrer Wellen 31 in Ausnehmungen 32 der auf dem Grundrahmen 34 aufgebauten Lagerböcke 33. Tellerfedern 36 drücken die Wellen 31 gegen das Ende der Ausnehmungen 32 im Ruhezustand, in dem die Vorrichtung mit einem zu zerstörenden Reifen 12 beladen wird. Im Arbeitszustand werden die Tellerfedern durch das Quetschen des Reifens 12 belastet. Die Walze 4 ist mit ihrer Welle 37 im Lagerbock 35 gelagert, der ebenfalls auf dem Grundrahmen 34 aufgebaut ist.

Diese zuletzt beschriebene Vorrichtung läßt sich auch betreiben, wenn nur eine von den mit Ausnehmungen 28 versehenen Walzen 27 vorhanden ist.

| Liste der Bezugszeichen: | | | |
|---|---|---|---|
| l | Pressengestell | 29 | Abschnitt |
| 2 | Lager | 30 | Arbeitsbereich |
| 3 | Welle | 31 | Welle |
| 4 | Walze | 32 | Ausnehmung |
| 5 | Keilriemenvorgelege | 33 | Lagerbock |
| 6 | Motor | 34 | Grundrahmen |
| 7 | freies Ende | 35 | Lagerbock |
| 8 | Lager | 36 | Tellerfeder |
| 9 | Stütze | 37 | Welle |
| l0 | Kolbenstange | | |
| ll | Hydraulik-Kolben-Zylinder-Einheit | | |
| l2 | Altgummireifen | | |
| l3 | Hydraulik-Kolben-Zylinder-Einheit | | |
| l4 | Kolbenstange | | |
| l5 | Träger | | |
| l6 | Walze | | |
| l7 | Stirnseite | | |
| l8 | Führung | | |
| l9 | Fuß | | |
| 20 | Rutsche | | |
| 2l | Transportband | | |
| 22 | Rutsche | | |
| 23 | Vertiefung | | |
| 24 | Metalleinlage | | |
| 25 | Walze | | |
| 26 | Umlenkstelle | | |
| 27 | Walze | | |
| 28 | Ausnehmung | | |

## Patentansprüche

1. Verfahren zur Entsorgung von Altgummireifen durch Destruktion,
dadurch gekennzeichnet,
daß man den Reifen zwischen zwei Walzen einspannt, von denen die eine an den zur Anlage an der Felge bestimmten Wülsten, die andere an der Lauffläche des Reifens anliegt,
daß man die Walzen mit erheblicher Kraft gegeneinander drückt und den Reifen dabei unter Zusammendrücken seiner ursprünglichen Form und Verringerung seiner Laufflächenstärke im Walzenspalt quetscht
und daß man die gegeneinander gedrückten Walzen rotiert.

2. Verfahren nach Anspruch l,
dadurch gekennzeichnet,
daß man die Walzen mit unterschiedlicher Umfangsgeschwindigkeit rotieren läßt.

3. Verfahren nach Anspruch l,
dadurch gekennzeichnet,
daß man eine Walze von einem Durchmesser, der erheblich kleiner als der Reifendurchmesser ist, für die Anlage an den Wülsten verwendet,
daß man neben der zweiten Walze noch eine dritte Walze an der Lauffläche des Reifens unter starkem Preßdruck anliegen läßt,
wobei die drei Walzenachsen einen stumpfen Winkel einschließen oder in einer Ebene liegen,
und daß man dadurch den Reifen in eine unrunde, vorzugsweise birnenförmige Form zwingt.

4. Verfahren nach Anspruch l,
dadurch gekennzeichnet,
daß man neben der an den Wülsten des Reifens anliegenden Walze noch eine zweite ebenfalls an den Wülsten des Reifens anliegende Walze zusätzlich anordnet
und daß man die an der Lauffläche anliegende Walze in den Zwischenraum zwischen den beiden an den Wülsten des Reifens anliegenden Walzen hineindrückt.

5. Verfahren nach einem der vorhergehenden Ansprüche,
dadurch gekennzeichnet,
daß man Walzen mit rauhen Oberflächen oder mit einer Grobverzahnung verwendet.

6. Verfahren nach Anspruch l,
dadurch gekennzeichnet,
daß man drei Walzen mit in einer Ebene angeordneten Walzenachsen verwendet,
von denen die mittlere einen kleineren Durchmesser als den Wulstdurchmesser des zu zerstörenden Reifens aufweist
und von denen die beiden äußeren je eine Ausnehmung von der Gestalt eines Kreisscheibensegmentes mit einem Durchmesser größer als der Durchmesser des zu zerstörenden Reifens sowie außerhalb der Ausnehmung, jedoch dieser benachbart, einen Umfangsabschnitt mit sich vergrößerndem Radius aufweisen.

7. Vorrichtung zur Entsorgung von Altgummireifen durch Destruktion,
bestehend aus zwei Walzen (4,l6),
von denen mindestens die eine (4) einen kleineren Durchmesser als den Wulstdurchmesser des zu zerstörenden Reifens (l2) aufweist und für die Anlage an den Wülsten, die andere Walze (l6) für die Anlage an der Lauffläche des zu zerstörenden Reifens (l2) bestimmt ist, aus einem Antrieb (5,6) für mindestens die eine Walze (4)
und aus einer Verschiebe- und Preßvorrichtung (l3,l4,l5), mit der die eine Walze (l6) gegen die andere Walze (4) anpreßbar ist.

8. Vorrichtung nach Anspruch 7,
dadurch gekennzeichnet,
daß eine dritte, an die Lauffläche des Reifens (l2) anpreßbare Walze (25) vorgesehen ist,
wobei die Achsen der Walzen (4,25) einen stumpfen Winkel miteinander einschließen und die mittlere Walze (4) einen erheblich kleineren Durchmesser als der zu zerstörende Reifen aufweist.

9. Vorrichtung nach Anspruch 7,
dadurch gekennzeichnet,
daß eine dritte Walze vorgesehen ist, deren Durchmesser erheblich kleiner als der Wulstdurchmesser des zu zerstörenden Reifens ist und die ebenfalls an den Wülsten des zu zerstörenden Reifens anliegt,
wobei die an der Lauffläche anliegende Walze in den Zwischenraum zwischen den beiden an den Wülsten anliegenden Walzen gepreßt wird.

10. Vorrichtung nach Anspruch 7,
dadurch gekennzeichnet,
daß drei Walzen (4,27) mit in genähert einer Ebene angeordneten Walzenachsen angeordnet sind,
von denen die mittlere (4) einen kleineren Durchmesser als den Wulstdurchmesser des zu zerstörenden Reifens (l2) aufweist
und von denen die beiden äußeren je eine Ausnehmung (28) von der Gestalt eines Kreisscheibensegmentes mit einem Durchmesser größer als der Durchmesser des zu zerstörenden Reifens (l2) sowie außerhalb der Ausnehmung, jedoch dieser benachbart, einen Umfangsabschnitt (29) mit sich vergrößerndem Radius aufweisen.

11. Vorrichtung nach einem der Ansprüche 7-l0,
dadurch gekennzeichnet,
daß die Oberfläche der Walzen aufgerauht oder grob verzahnt ist.

12. Vorrichtung nach einem der Ansprüche 7-9,
dadurch gekennzeichnet,
daß zumindest die eine Walze (4), an welcher die Wülste des zu zerstörenden Reifens (l2) anliegen, einseitig gelagert und vorzugsweise auf der anderen Seite während des Betriebes durch eine in der Außerbetriebsstellung entfernbare Stütze (9,l0) abgestützt ist.

13. Vorrichtung nach Anspruch l2,
dadurch gekennzeichnet,
daß die Stütze eine Hydraulik-Zylinder-Kolben-Einheit (l0,ll) ist, welche eine Halblagerschale (9) trägt.

14. Vorrichtung nach Anspruch 7,
gekennzeichnet durch
eine Zubringevorrichtung von zu zerstörenden Reifen zur an den Wülsten des zu zerstörenden Reifens anliegenden Walze, vorzugsweise in Form einer Gabel, eines Hakens oder einer Rutsche.
